# EUROPEAN PATENT APPLICATION

(11) **EP 2 275 751 A1**
(43) Date of publication of application: **19.01.2011**
(21) Application number: 08740522.1
(22) Date of filing: 16.04.2008
(51) Int. Cl.: F24F 7/08

(54) **HEAT EXCHANGING VENTILATING APPARATUS**

(71) Applicant: Mitsubishi Electric Corporation, Tokyo 100-8310 (JP)
(72) Inventor: TAKADA, Masaru, Tokyo 100-8310 (JP); ONISHI, Shigeki, Tokyo 100-8310 (JP); ARAI, Hidemoto, Tokyo 100-8310 (JP)
(74) Representative: Hopkin, Tobias J.B.
(86) International application number: PCT/JP2008/057446
(87) International publication number: WO 2009/128150

(57) **Abstract**

When configuring a heat exchange ventilator that includes a supply air duct that takes in outdoor air and blows it out indoors, an exhaust air duct that takes in indoor air and blows it out outdoors, and a plurality of heat exchange elements that exchanges heat between outdoor air flowing down through the supply air duct and indoor air flowing down through the exhaust air duct, the heat exchange elements being arranged in series from an outdoor side to an indoor side, the sensible heat exchange efficiency of a heat exchange element arranged on the most outdoor side is made higher than the sensible heat exchange efficiency of a heat exchange element arranged on an indoor side adjacent to the heat exchange element arranged on the most outdoor side, or the latent heat exchange efficiency of the heat exchange element arranged on the most outdoor side is made lower than the latent heat exchange efficiency of the heat exchange element arranged on an indoor side adjacent to the heat exchange element arranged on the most outdoor side, thereby preventing condensation and freezing on the heat exchange element on the outdoor side.

## Description

### TECHNICAL FIELD

The present invention relates to a heat exchange ventilator that provides ventilation while performing exchange of sensible heat or exchange of latent heat between two air flows different to each other in temperature or humidity.

### BACKGROUND ART

Particularly in summer and winter, because a difference in temperature is large between outdoors and indoors; when ventilating a room in which a cooling equipment using a refrigerating cycle or a heater is used, and if outdoor air is directly brought indoors, loads on the cooling equipment or the heater are increased. So-called ventilation load is increased.

Therefore, a heat exchange ventilator has been developed that carries out heat exchange between outdoor air taken from outdoors and indoor air exhausted from indoors during ventilation, by a heat exchange element. Such heat exchange ventilator is required to carry out the heat exchange while ensuring a desired ventilation air volume, and to collect heat from exhaust air (indoor air) to supply air (outdoor air). To ensure flexibility of design of, such as a building, in which the heat exchange ventilator is to be placed, downsizing of the heat exchange ventilator is required. For example, because in order to reserve a wide space for a habitable room, generally the spatial height of a loft is designed to be as small as possible, it is required to make the height of the heat exchange ventilator to be placed in such as a loft, as low as possible.

For example, similarly to an air conditioner described in Patent Document 1, an air conditioner has been known that includes a humidifier in its inside, and is configured to humidify indoor air taken from an indoor air inlet with the humidifier while taking indoor air from another indoor air inlet, and to blow out indoor air into the room again that is cooled by a heat exchange element between the humidified indoor air and the not-humidified indoor air; however, such air conditioner has a large heat loss and is inefficient, therefore, a heat source is not internally arranged in many of heat exchange ventilators.

Recently, to achieve both improvement in heat exchange efficiency and reduction in the height of the equipment, various heat exchange ventilators using a plurality of heat exchange elements instead of a single heat exchange element are proposed. For example, Patent Document 2 describes a total heat exchanger in which a plurality of heat exchange elements is arranged in series in a flowing direction of air. Patent Document 3 describes a ventilator in which a plurality of heat exchangers is arranged in a casing that includes an inlet and an outlet of an intake fluid, and an inlet and an outlet of an exhaust fluid.

Although it is preferable to make an air duct diameter in a heat exchange element small in order to improve heat exchange efficiency; if the air duct diameter in a heat exchange element is small, the air duct tends to be easily blocked with frost, consequently, sometimes air may not flow through the heat exchange element, and ventilation cannot be carried out in a worst case. In other words, when operating a heat exchange ventilator in winter in a cold district, exhaust air (indoor air) is cooled by heat exchange with supply air (outdoor air), as a result, water vapor in exhaust air tends to condense in a heat exchange element and to cause condensation; if the heat exchange ventilator is continued to operate while condensed drops are refrigerated and icing (frost) is left in an air duct of the heat exchange element, ice gradually grows and the air duct of the heat exchange element is sometimes blocked by the ice, and turns incapable to perform ventilation in some cases. Therefore, various measures to prevent frost are made.

For example, Patent Document 4 describes a heat exchange ventilator that includes a low-temperature duct through which cold air (outdoor air) flows, a high-temperature duct through which hot air (indoor air) flows, and a damper that controls a communication and a separation with the low-temperature duct and the high-temperature duct, and is configured to prevent frost from forming in the high-temperature duct by performing anti-icing operation of flowing hot air through the low-temperature duct as required.

Patent Document 5 describes an anti-icing system that includes a cold air inlet that leads inward outdoor air and a hot air inlet that leads inwards indoor air, an air outlet that supplies the above outdoor air or the above indoor air to a heat exchange ventilator, a damper that selectively closes the cold air inlet and the hot air inlet, and a heating element that is provided in the vicinity of the air outlet and heats air; and is configured to melt frost in the heat exchange ventilator by applying power to the heating element as required.

Patent Document 6 describes a heat exchange ventilator that the inside of a housing is partitioned with partition plates into a supply route and an exhaust root; a heat exchange element is provided at a cross point between the routes; an opening is provided on a partition plate on an upstream side of the heat exchange element; a damper that causes the supply route and the exhaust route to communicate with each other is provided to the opening; the supply route and the exhaust route are communicated with each other by turning the damper as required, so that frost deposited on the heat exchange element is removed.

Patent Document 7 describes a heat exchange ventilator that an air-flow separating unit is provided on an exhaust plane of indoor air in a heat exchanger, thereby preventing water produced by a defrost operation from frosting again afterwards.

Patent Document 8 describes a heat exchange ventilator that is provided with an opening on a partition that partitions between an air duct of hot air (indoor air) after passing through a heat exchange element and an air duct of cold air (outdoor air) before passing through the heat exchange element, and provided with a damper to the opening, and controls an operation of the damper as required, mixes the hot air into the cold air and returns it into a room again, thereby constantly performing ventilation while preventing the heat exchange element from freezing.
Patent Document 1: Japanese Patent Application Laid-open No. S61-107020
Patent Document 2: Japanese Patent Application Laid-open No. 2006-337015
Patent Document 3: Japanese Patent Application Laid-open No. 2000-146250
Patent Document 4: Japanese Utility Model Application Laid-open No. S62-17743
Patent Document 5: Japanese Patent Application Published No. H3-50180
Patent Document 6: Japanese Patent Application Laid-open No. 2005-331193
Patent Document 7: Japanese Patent Application Laid-open No. 2001-235199
Patent Document 8: Japanese Patent Application Laid-open No. 2007-170712

### DISCLOSURE OF INVENTION

### PROBLEM TO BE SOLVED BY THE INVENTION

Any of conventional heat exchange ventilators or conventional anti-icing systems that can prevent frost on a heat exchange element is configured either to stop ventilation during an anti-icing operation (a defrost operation), or to mix supply air (outdoor air) and exhaust air (indoor air), so that during the anti-icing operation, the ventilation cannot be carried out, or a ventilation air volume decreases. Therefore, to keep the ventilation air volume per unit of time during the anti-icing operation equal to a ventilation air volume during a usual operation, a processing air rate during the anti-icing operation has to be higher than a processing air rate during the usual operation, and a heat exchange element needs to be upsized in order to maintain a heat exchange efficiency during the anti-icing operation equal to the heat exchange efficiency during the usual operation.

However, it is difficult to plan upsizing of the heat exchange element due to a relation to a placement space, such as a loft. Moreover, because downsizing of an air duct diameter in a heat exchange element tends to cause frost, it is also difficult to improve the heat exchange efficiency while limiting up sizing of the heat exchange element by downsizing the air duct diameter. For this reason, to prevent condensation and frost on the heat exchange element, it often has to sacrifice the heat exchange efficiency in the heat exchange ventilator.

The present invention has been made to solve the above problems, and an object of the present invention is to obtain a heat exchange ventilator that easily achieve prevention of condensation and frost on a heat exchange element and an improvement in the heat exchange efficiency, while limiting a height dimension of the equipment.

### MEANS FOR SOLVING PROBLEM

To solve above-mentioned problems and to achieve the object, a heat exchange ventilator includes a supply air duct that takes in outdoor air and blows it out indoors, an exhaust air duct that takes in indoor air and blows it out outdoors, and a plurality of heat exchange elements that exchanges heat between outdoor air flowing down through the supply air duct and indoor air flowing down through the exhaust air duct, the heat exchange elements being arranged in series from an outdoor side to an indoor side, wherein a sensible heat exchange efficiency of a heat exchange element arranged on a most outdoor side is higher than a sensible heat exchange efficiency of a heat exchange element arranged on an indoor side adjacent to the heat exchange element arranged on the most outdoor side.

To solve above-mentioned problems and to achieve the object, a heat exchange ventilator includes a supply air duct that takes in outdoor air and blows it out indoors, an exhaust air duct that takes in indoor air and blows it out outdoors, and a plurality of heat exchange elements that exchanges heat between outdoor air flowing down through the supply air duct and indoor air flowing down through the exhaust air duct, the heat exchange elements being arranged in series from an outdoor side to an indoor side, wherein a latent heat exchange efficiency of a heat exchange element arranged on a most outdoor side is lower than a latent heat exchange efficiency of a heat exchange element arranged on an indoor side adjacent to the heat exchange element arranged on the most outdoor side.

To solve above-mentioned problems and to achieve the object, a heat exchange ventilator includes a supply air duct that takes in outdoor air and blows it out indoors, an exhaust air duct that takes in indoor air and blows it out outdoors, and a plurality of heat exchange elements that exchanges heat between outdoor air flowing down through the supply air duct and indoor air flowing down through the exhaust air duct, the heat exchange elements being arranged in series from an outdoor side to an indoor side, wherein a sensible heat exchange efficiency of a heat exchange element arranged on a most outdoor side is higher than a sensible heat exchange efficiency of a heat exchange element arranged on an indoor side adjacent to the heat exchange element arranged on the most outdoor side, and a latent heat exchange efficiency of the heat exchange element arranged on the most outdoor side is lower than a latent heat exchange efficiency of the heat exchange element arranged on an indoor side adjacent to the heat exchange element arranged on the most outdoor side.

### EFFECT OF THE INVENTION

Any of the heat exchange ventilators according to the present invention include a plurality of heat exchange elements arranged in series, thereby being able to increase heat exchange efficiency, compared with a case of performing heat exchange only with a single heat exchange element. As a result, even if a height dimension is made smaller than a heat exchange ventilator that performs heat exchange only with a single heat exchange element, the heat exchange efficiency is equal to that of the heat exchange ventilator with the single heat exchange element can be obtained.

Among the heat exchange ventilators according to the present invention, in one of them that a sensible heat exchange efficiency of a heat exchange element arranged on the most outdoor side is higher than the sensible heat exchange efficiency of a heat exchange element arranged on an indoor side adjacent to the heat exchange element arranged on the most outdoor side, the temperature of indoor air flowing into the heat exchange element positioned on the most outdoor side is higher than that in a case where the respective sensible heat exchange efficiencies of the heat exchange elements are equal, consequently, condensation and frost are hard to be produced on the heat exchange element during heat exchange with outdoor air. On the other hand, among the heat exchange ventilators according to the present invention, in one of them in which the latent heat exchange efficiency of a heat exchange element arranged on the most outdoor side is lower than the latent heat exchange efficiency of a heat exchange element arranged on an indoor side adjacent to the most outdoor side, the humidity of indoor air flowing into the heat exchange element positioned on the most outdoor side is lower than that in a case where the respective latent heat exchange efficiencies of the heat exchange elements are equal, consequently, condensation and frost are hard to be produced on the heat exchange element during heat exchange with outdoor air.

If condensation and frost are managed to be prevented, the air duct diameter in the heat exchange element can be made small and its heat exchange efficiency can be easily improved. Accordingly, the heat exchange ventilator according to the present invention easily achieves prevention of condensation and frost on a heat exchange element and an improvement in the heat exchange efficiency, while limiting a height dimension of the equipment.

### BRIEF DESCRIPTION OF DRAWINGS

FIG. 1 is a vertical cross-sectional view that schematically depicts an example of a heat exchange ventilator according to the present invention;
FIG. 2 is a perspective view that schematically depicts two heat exchange units used in the heat exchange ventilator shown in FIG. 1;
FIG. 3-1 is a perspective view that schematically depicts a heat exchange element used in the heat exchange ventilator shown in FIG. 1;
FIG. 3-2 is a front view that schematically depicts the heat exchange element shown in FIG. 3-1;
FIG. 4 is a vertical cross-sectional view that schematically depicts an example of a heat exchange ventilator among heat exchange ventilators according to the present invention, of which a plurality of individual heat exchange elements is adjusted by changing the volume and the heat-transfer area of each of the heat exchange elements;
FIG. 5-1 is a perspective view that schematically depicts an example of a heat exchange element that can be used in the heat exchange ventilator according to the present invention, and includes an air duct having a rectangular cross section;
FIG. 5-2 is a front view that schematically depicts the heat exchange element shown in FIG. 5-1;
FIG. 6 is a graph that indicates an example of respective measurement results of variations with time in before-and-after differential pressure in a heat exchange element on which condensation and frost is controlled, and variations with time in before-and-after differential pressure in a heat exchange element on which condensation and frost is in progress; and
FIG. 7 is a table that indicates respective measurement results of the total heat exchange efficiency and an average pressure-loss increase-speed ratio obtained with respect to each of heat exchange ventilators according to each of Examples 1 to 3, Reference Examples 1 and 2, and Comparative Examples 1 and 2.

### EXPLANATIONS OF LETTERS OR NUMERALS

10 Housing
13a, 13B Heat exchange element
15A, 15B, 15C, 15D Heat exchange unit
50A, 50B Heat exchange ventilator
SF Supply air flow
EF Exhaust air flow

### BEST MODE(S) FOR CARRYING OUT THE INVENTION

Exemplary embodiments of a heat exchange ventilator according to the present invention will be explained below in detail with reference to the accompanying drawings. However, the present invention is not limited by the following embodiments.

### First embodiment.

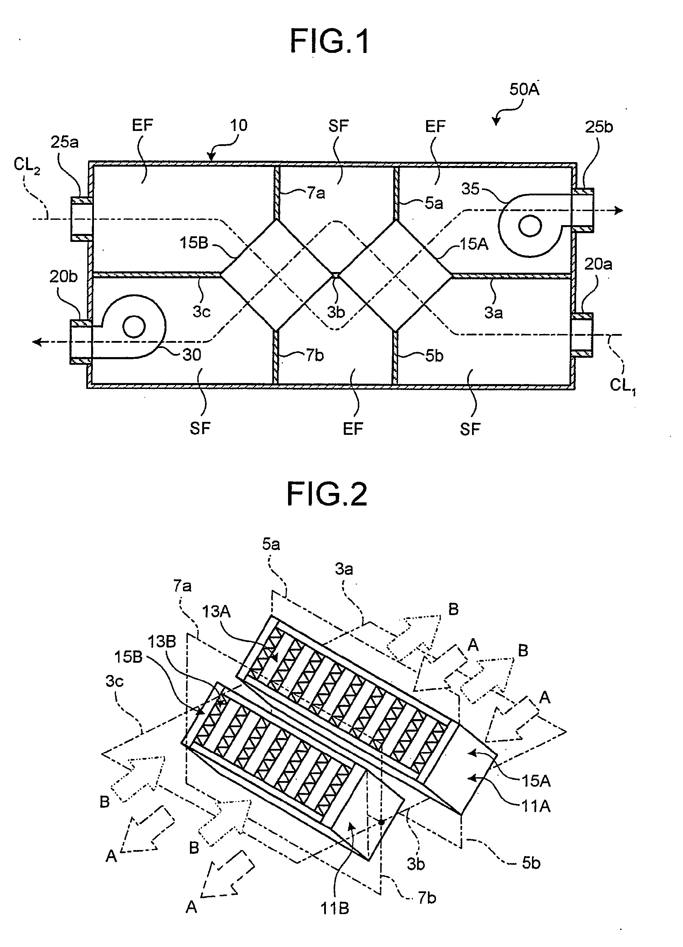

FIG. 1 is a vertical cross-sectional view that schematically depicts an example of a heat exchange ventilator according to the present invention; and FIG. 2 is a perspective view that schematically depicts two heat exchange units used in the heat exchange ventilator shown in FIG. 1. Among component members shown in FIG. 2, component members that are also shown in FIG. 1 are assigned with the same reference numerals as those used in FIG. 1.

A heat exchange ventilator 50A shown in FIG. 1 includes a housing 10; two heat exchange units 15A and 15B arranged in a center of the housing 10; an outdoor air inlet 20a, an outdoor air outlet 20b, an indoor air inlet 25a, and an indoor air outlet 25b each of which is attached to the housing 10; a supply air fan 30 arranged in the housing 10, an exhaust air fan 35 arranged in the housing 10, and a control unit (not shown) that controls operations of the supply air fan 30 and the exhaust air fan 35.

Inside the housing 10, three horizontal partitions 3a, 3b, and 3c, and four vertical partitions 5a, 5b, 7a, and 7c are provided. The two of the horizontal partitions 3a and 3b, and the two of the vertical partitions 5a and 5b are separated from each other in the center and slightly outdoor side, at which the first heat exchange unit 15A is arranged. The two of the horizontal partitions 3b and 3c, and the two of the vertical partitions 7a and 7b are separated from each other in the center and slightly indoor side in the housing 10, at which the second heat exchange unit 15B is arranged.

As shown in FIG. 2, the first heat exchange unit 15A includes a frame 11A and a heat exchange element 13A accommodated in the frame 11A, and the second heat exchange unit 15B includes a frame 11B and a heat exchange element 13B accommodated in the frame 11B. The heat exchange units 15A and 15B are arranged in series with each other such that the heat exchange elements 13A and 13B are laid, and a current flowing down through one of the heat exchange elements flows into the other heat exchange element.

The outdoor air inlet 20a attached to the housing 10 shown in FIG. 1 communicates with a space below the horizontal partition 3a in the housing 10, and the outdoor air outlet 20b communicates with a space below the horizontal partition 3c in the housing 10. The indoor air inlet 25a communicates with a space above the horizontal partition 3c in the housing 10, and the indoor air outlet 25b communicates with a space above the horizontal partition 3a in the housing 10.

The supply air fan 30 is arranged below the horizontal partition 3c in the housing 10. The supply air fan 30 operates under the control of the control unit, and a supply air flow SF that is taken from outdoor air and blows out indoors is formed inside the heat exchange ventilator 50A by driving the supply air fan 30. The outdoor air inlet 20a functions as an inlet of the supply air flow SF, and the outdoor air outlet 20b functions as an outlet of the supply air flow SF. The outdoor air taken from the outdoor air inlet 20a into the heat exchange ventilator 50A passes through the first heat exchange unit 15A, flows into the space above the horizontal partition 3b, and blows out indoors via the second heat exchange unit 15B, the supply air fan 30, and the outdoor air outlet 20b. In FIG. 1, a flow of outdoor air in the supply air flow SF is denoted by a dash-single-dot line CL₁. In FIG. 2, a flow of outdoor air is denoted by an arrow A in dash-single-dot line.

The exhaust air fan 35 is arranged above the horizontal partition 3a in the housing 10. The exhaust air fan 35 operates under the control of the control unit, an exhaust air flow EF that is taken from indoor air and blow out outdoors is formed inside the heat exchange ventilator 50A by driving the exhaust air fan 35. The indoor air inlet 25a functions as an inlet of the exhaust air flow EF, and the indoor air outlet 25b functions as an outlet of the exhaust air flow EF. The indoor air taken from the indoor air inlet 25a into the heat exchange ventilator 50A passes through the second heat exchange unit 15B, flows into the space below the horizontal partition 3b, and blows out outdoors via the first heat exchange unit 15A, the exhaust air fan 35, and the indoor air outlet 25b. In FIG. 1, a flow of indoor air in the exhaust air flow EF is denoted by a dash-double-dot line CL₂. In FIG. 2, a flow of indoor air is denoted by an arrow B in dash-double-dot line.

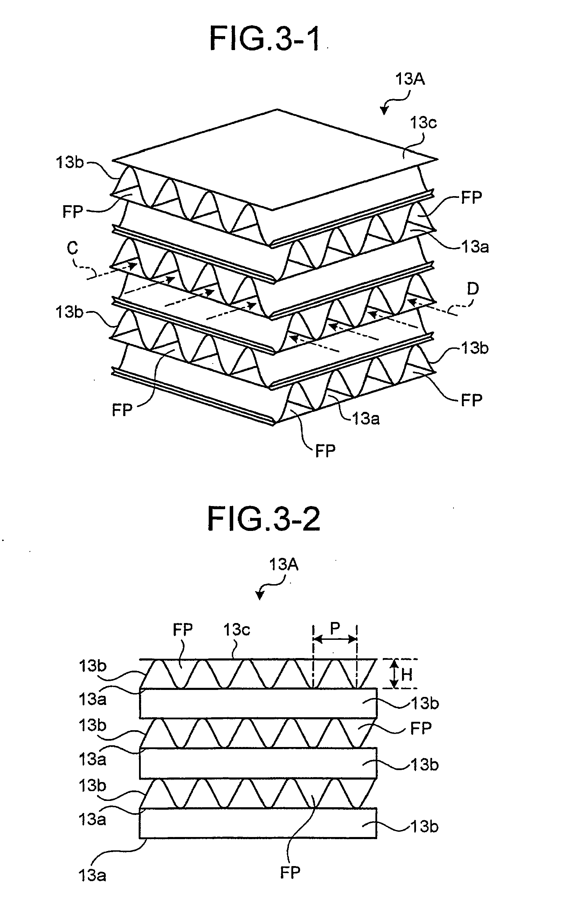

The heat exchange ventilator 50A having such configuration is characterized by a combination of the heat exchange element 13A and the heat exchange element 13B (see FIG. 2), therefore, each of the heat exchange elements 13A and 13B is explained below in detail with reference to FIGS. 3-1 and 3-2.

Each of the heat exchange elements 13A and 13B is a total heat exchange element of a cross flow type. As shown in FIG. 3-1, in the heat exchange element 13A, partition members 13a in sheet form and spacing members 13b in wave form are alternately layered, and a top plate 13c in the same configuration as the partition member 13a is layered on the top of the spacing members 13b. As a result, a plurality of air flow paths FP is formed between the partition member 13a and the spacing member 13b therebelow, and between the partition member 13a and the spacing member 13b thereabove, respectively.

Each of the air flow paths FP formed below the partition member 13a and each of the air flow paths FP formed above the partition member 13a are substantially perpendicular to each other, and exchange of sensible heat and exchange of latent heat are carried out via the partition member 13a between air flowing down through each of the air flow paths FP formed below the partition member 13a, and air flowing down through each of the air flow paths FP formed above the partition member 13a. In FIG. 3-1, the direction of a flow of outdoor air is denoted by an arrow C in dash-single-dot line, and the direction of a flow of indoor air is denoted by an arrow D in dash-double-dot line. FIG. 3-1 is a perspective view that schematically depicts the heat exchange element 13A, and the number of layers of the partition members 13a and the spacing members 13b are different from the number of layers in a real heat exchange element 13A.

FIG. 3-2 is a front view that schematically depicts the heat exchange element shown in FIG. 3-1. As shown in the figure, to control the heat exchange efficiency of the heat exchange element 13A, the heat exchange element 13A have a pitch P and a height H of the air flow paths to be formed with the partition member 13a and the spacing member 13b thereabove or therebelow preliminarily selected. Even when using the same materials, as heat exchange elements are manufactured by varying the pitch P and the height H, heat exchange elements of a cross flow type each of which has different sensible heat exchange efficiency and different latent heat exchange efficiency from the others can be obtained.

The heat exchange element 13B (see FIG. 2) has a configuration similar to the heat exchange element 13A described above, and is a total heat exchange element of a cross flow type of which external dimensions are also substantially equal to the external dimensions of the heat exchange element 13A; however, the pitch P and the height H described above are each different from the pitch P and the height H in the heat exchange element 13A, the sensible heat exchange efficiency in the heat exchange element 13B is lower than the sensible heat exchange efficiency in the heat exchange element 13A, and the latent heat exchange efficiency in the heat exchange element 13B is higher than the latent heat exchange efficiency in the heat exchange element 13A. In other words, according to the heat exchange ventilator 50A (see FIG. 1), the sensible heat exchange efficiency of the heat exchange element 13A arranged on the most outdoor side is higher than the sensible heat exchange efficiency of the heat exchange element 13B arranged on the indoor side adjacent to the heat exchange element 13A, and the latent heat exchange efficiency of the heat exchange element 13A arranged on the most outdoor side is lower than the latent heat exchange efficiency of the heat exchange element 13B arranged on the indoor side adjacent to the heat exchange element 13.

The heat exchange ventilator 50A in which the heat exchange element 13A and the heat exchange element 13B described above are arranged in series performs heat exchange with two of the heat exchange elements 13A and 13B, thereby being capable to obtain higher heat exchange efficiency than in a case of performing heat exchange only with a single heat exchange element. For this reason, even if reducing a height dimension to smaller than that of a heat exchange ventilator performing heat exchange only with a single heat exchange element, heat exchange efficiency equal to that of the heat exchange ventilator only with the single heat exchange element can be obtained.

Moreover, because the sensible heat exchange efficiency is higher in the heat exchange element 13A on the outdoor side than in the heat exchange element 13B on the indoor side, compared with a case of using two heat exchange elements having the same sensible heat exchange efficiency, the temperature of indoor air flowing into the heat exchange element 13A becomes higher, consequently, the temperature of the heat exchange element 13A is also higher. For this reason, during heat exchange with outdoor air, condensation and frost are difficult to be produced on the heat exchange element 13A, and condensation and frost are more difficult be produced on the heat exchange element 13B that is on a further outdoor side than the heat exchange element 13A.

Furthermore, because the latent heat exchange efficiency is higher in the heat exchange element 13B on the indoor side than in the heat exchange element 13A on the outdoor side, collection of latent heat is performed by the heat exchange element 13B more positively than in a case of using two heat exchange elements having the same latent heat exchange efficiency, and the humidity of indoor air flowing into the heat exchange element 13A becomes lower. From this point, condensation and frost are difficult to be produced on the heat exchange element 13A during heat exchange with outdoor air.

From these reasons, the heat exchange ventilator 50A can easily improve the heat exchange efficiency of the heat exchange element 13A by reducing its air duct diameter, and easily achieve prevention of condensation and frost on each of the heat exchange elements 13A and 13B while limiting the height dimension of the equipment. A thin and reliable one of the heat exchange ventilator 50A can be easily obtained.

Moreover, when a defrost function is added to the heat exchange ventilator 50A, an interval of defrost operations can be long. During defrost operation, energy collection from exhaust air (indoor air) cannot be substantially performed, and an exhaust air (outdoor air) temperature blown out indoors is the one after ice deposited on the heat exchange element is melted, which is lower than the temperature of indoor air without exception, consequently, a load in a ventilation operation performed afterwards is increased, and energy is consumed more. For this reason, an extension of an interval of defrost operations can bring about increase in energy collection rate, and reduction in ventilation load. In some cases, a technical effect is expected that the defrost function or a drain pan as a countermeasure against condensation can be omitted.

Generally, because the housing of a heat exchange ventilator is cooled by outdoor air, condensation sometimes occurs inside the housing itself, inside the supply air duct, and/or inside the exhaust air duct in a region on the outdoor side in the heat exchange ventilator, and mold sometimes grows caused by the condensation; however, the water content in indoor air to be exhausted outdoors is reduced in the heat exchange ventilator 50A, so that a technical effect can be expected that condensation and frost, and growth of mold in regions other than the heat exchange elements 13A and 13B are to be prevented.

### Second embodiment.

The heat exchange efficiency in a heat exchange element can be controlled by changing a volume and or a heat-transfer area of the heat exchange element. The latent heat exchange efficiency can be controlled with materials of the heat exchange element, and a quantity and a type of a moisture absorbent to be contained. In the heat exchange ventilator according to the present invention, the heat exchange efficiency of each of individual heat exchange elements can be controlled by controlling the volume and/or the heat-transfer area of the heat exchange element, or the quantity and the type of the moisture absorbent to be contained in the heat exchange element.

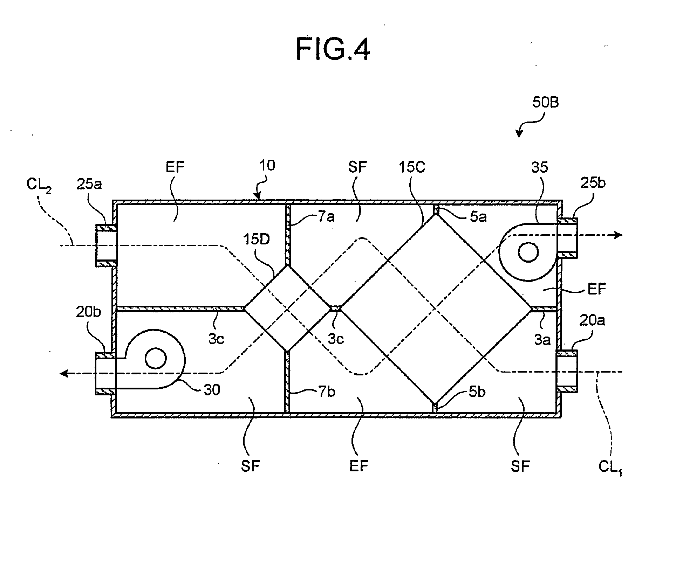

FIG. 4 is a vertical cross-sectional view that schematically depicts an example of a heat exchange ventilator of which a plurality of individual heat exchange elements is adjusted by changing the volume and the heat-transfer area of each of the heat exchange elements. Among component members shown in FIG. 4, component members that have the functions in common with those shown in FIG. 1 are assigned with the same reference numerals as those used in FIG. 1, except each of heat exchange units 15C and 15D.

A heat exchange ventilator 50B shown in the figure includes two heat exchange units 15C and 15D. A heat exchange element (not shown FIG. 4) included in the heat exchange unit 15C is larger than a heat exchange element (not shown in FIG. 4) included in the heat exchange unit 15D; its sensible heat exchange efficiency is higher than the sensible heat exchange efficiency of the heat exchange element in the heat exchange unit 15D; and its latent heat exchange efficiency is lower than the latent heat exchange efficiency of the heat exchange element included in the heat exchange unit 15D. The heat exchange ventilator 50B constructed by combining these heat exchange elements has technical effects similar to the heat exchange ventilator 50A explained above in the first embodiment.

Although the heat exchange ventilator according to the present invention is explained above with reference to the two embodiments, the present invention is not limited to the above embodiments as described above. The heat exchange ventilator according to the present invention can be any in which a plurality of heat exchange elements arranged in series from the outdoor side to the indoor side is included; and the sensible heat exchange efficiency of a heat exchange element arranged on the most outdoor side is higher than the sensible heat exchange efficiency of a heat exchange element arranged on the indoor side adjacent to the heat exchange element arranged on the most outdoor side, or the latent heat exchange efficiency of the heat exchange element arranged on the most outdoor side is lower than the latent heat exchange efficiency of the heat exchange element arranged on the indoor side adjacent to the heat exchange element arranged on the most outdoor side. The heat exchange element arranged on the most outdoor side can be one that has a higher sensible heat exchange efficiency and a lower latent heat exchange efficiency than those of the heat exchange element arranged on the indoor side adjacent to the heat exchange element arranged on the most outdoor side.

What kinds of heat exchange elements to be combined and used are appropriately selected in accordance with heat exchange characteristics required for the heat exchange ventilator. It can be a combination of only total heat exchange elements that perform both heat exchange of sensible heat and heat exchange of latent heat; it can be a combination of only sensible heat exchange elements that perform only heat exchange of sensible heat; or it can be a combination of total heat exchange elements and sensible heat exchange elements. A heat exchange element of not only a cross flow type, but also counter flow type can be used.

As already explained above, the heat exchange efficiency in a heat exchange element can be controlled by appropriately selecting the pitch P and the height H (see FIG. 3-2) of an air duct in the heat exchange element; or can be controlled by changing the volume and the heat-transfer area of the heat exchange element. The latent heat exchange efficiency can be controlled with materials to be the heat exchange element, and the quantity and the type of a moisture absorbent to be contained. Furthermore, the heat exchange efficiency can be controlled with the shape of each air duct in the heat exchange element.

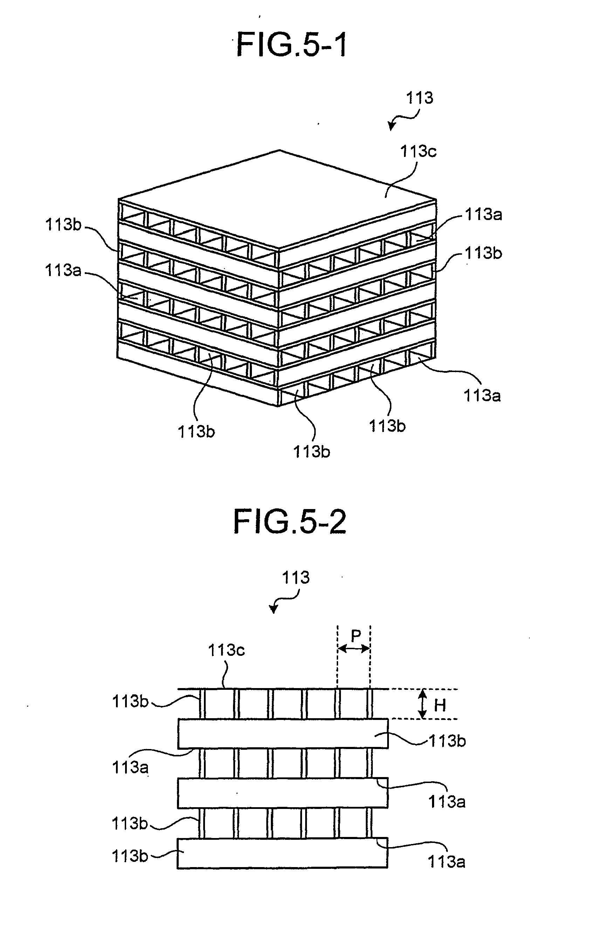

FIG. 5-1 is a perspective view that schematically depicts an example of a heat exchange element that includes an air duct having a rectangular cross section; and FIG. 5-2 is a front view that schematically depicts the heat exchange element shown in FIG. 5-1. A heat exchange element 113 shown the figures is configured such that a plurality of spacing members 113b shaped in flat plate standing on each one of partition members 113a forms one unit, and a plurality of units is layered; and a top plate 113c in the same configuration as the partition member 113a is layered on the top of the units.

In the heat exchange element 113 configured in this way, even if each of the pitch P and the height H (see FIG. 5-2) of an air duct is made equal to the pitch P or the height H in the heat exchange element 13A shown in FIG. 3-1 or 3-2, where materials are the same, the sensible heat exchange efficiency is generally slightly high, and the latent heat exchange efficiency is slightly low. This is because of following reasons.

Precisely, in the heat exchange element 13A in which the spacing member 13b is in wave form (corrugated form), although the heat-transfer area increases as the spacing member 13b functions as a fin, there is almost no effect of extending a moisture penetration area except an exceptional case, and rather a total contact area between the spacing member 13b and the partition member 13a is often wider than a total contact area in the heat exchange element 113 (a total contact area between the spacing member 113b and the partition member 113a), consequently, the net moisture penetration area tends to decreases slightly. When a heat exchange element including an air duct having a rectangle cross section and a heat exchange element including a spacing member shaped in wave form (corrugated form) are combined, it is generally preferable that the former is arranged on the indoor side, and the latter is arranged on the outdoor side.

In addition to the configurations explained in the first and the second embodiments, the heat exchange ventilator according to the present invention can include a bypass air duct for performing ventilation without passing through the heat exchange element, for example in spring or autumn when temperature and humidity differences between indoors and outdoors are small, and an air-duct switching device that controls an opening and a closing of the bypass air duct. Furthermore, an air-duct switching unit to be used for performing a defrost operation, a filter to be used for air cleaning, or the like, can be included. In addition to the above description, various modifications, decorations, and combinations can be applied to the heat exchange ventilator according to the present invention. The present invention is explained below in more detail with reference to examples.

### Examples

### Example 1.

As a heat exchange element to be arranged on the outdoor side and a heat exchange element to be arranged on the outdoor side, by using total heat exchange elements of a cross flow type having a configuration similar to the heat exchange element 13A shown in FIG. 3-1 were used, a heat exchange ventilator configured similarly to the heat exchange ventilator 50A shown in FIG. 1 was obtained.

To obtain the heat exchange ventilator, a nonporous hydrophilic polymer thin film was produced by thinly coating a polyurethane resin containing an oxyethylene group on a surface of a porous sheet of 25 µm in thickness made from polytetrafluoroethylene; and then a compound moisture penetration film that air-permeable nonwoven fabric was adhered by spot gluing on the back surface of the hydrophilic polymer thin film was used; so that partition members in a total heat exchange element to be arranged on the outdoor side were manufactured. Spacing members were manufactured by using a sheet of approximately 100 µm in thickness that pulp and fiber of a polyethylene resin were mixed. The pitch P of an air duct in the total heat exchange element was approximately 4.3 mm, and the height H (see FIG. 3-2) was approximately 1.8 mm. The total heat exchange element is hereinafter referred to as an "element I-A".

. Partition members in a total heat exchange element to be arranged on the indoor side were manufactured from specially-processed paper having a weighing capacity 20 g/m² added with a moisture absorbent processed by beating cellulose fiber (pulp) to have 200 seconds/100 cm³ or more of the Gurley air permeability as a single partition member; and spacing members were manufactured from flame-retardant paper having a basis weight 70 g/m². The pitch P of an air duct in the total heat exchange element was approximately 6.0 mm, and the height H was approximately 2.4 mm. The total heat exchange element is hereinafter referred to as an "element II-B".

Sizes and shapes of the partition members and the spacing members in a plan view were made to be the same between the element I-A and the element II-A; and a total number of layers of the partition members and the spacing members in each of the element I-A and the element II-B was controlled such that respective heights of the element I-A and the element II-B were to be equal.

### Example 2.

A total heat exchange element having the same configuration as the element I-A explained in Example 1 except that the pitch P of a flow route of an air flow was approximately 6.0 mm and the height H was approximately 2.4 mm (hereinafter, the total heat exchange element is referred to as an "element I-B") was manufactured and arranged on the outdoor side, and the others were made similar to Example 1; so that a heat exchange ventilator was obtained.

### Example 3.

A heat exchange ventilator was obtained by manufacturing the element I-B explained in Example 2 and arranging it on the indoor side, and leaving the others similar to Example 1.

### Example 4.

A total heat exchange element having the same configuration as the element I-B explained in Example 2, and having only the total width dimension in the direction orthogonal to the layered direction of the partition members and the spacing members made larger than the total width dimension of the element I-B, was manufactured and arranged on the outdoor side; and a total heat exchange element having the same configuration as the element II-B explained in Example 1, and having only the total width dimension in the direction orthogonal to the layered direction of the partition members and the spacing members made smaller than the total width dimension of the element II-B, was manufactured and arranged on the indoor side; so that a heat exchange ventilator having a configuration similar to the heat exchange ventilator 50B shown in FIG. 4 was obtained.

### Example 5.

A total heat exchange element having the same configuration as the element I-B explained in Example 2, and having only a dimension in the layered direction of the partition members and the spacing members made larger than the dimension in the element I-B, was manufactured and arranged on the outdoor side; and a total heat exchange element having the same configuration as the element II-B explained in Example 1, and having only a dimension in the layered direction of the partition members and the spacing members made smaller than the dimension in the element II-B, was manufactured and arranged on the indoor side; the others were configured similarly to the heat exchange ventilator 50A shown in FIG. 1; so that a heat exchange ventilator having such configuration was obtained. Sizes of each of horizontal partitions and each of vertical partitions in the housing were appropriately adjusted not to produce a gap between a partition and a heat exchange unit.

### Reference Example 1.

By using the element I-A explained in Example 1, a heat exchange ventilator configured similarly to the heat exchange ventilator 50A shown in FIG. 1 except to include only the element I-A as a heat exchange element was obtained. Sizes of each of horizontal partitions and each of vertical partitions in the housing were appropriately adjusted not to produce a gap between a partition and a heat exchange unit.

### Reference Example 2.

By using the element I-B explained in Example 2, a heat exchange ventilator configured similarly to the heat exchange ventilator 50A shown in FIG. 1 except to include only the element I-B as a heat exchange element was obtained. The size of each of horizontal partitions and each of vertical partitions in the housing was appropriately adjusted not to produce gap between a partition and a heat exchange unit.

### Comparative Example 1.

A heat exchange ventilator was obtained similarly to Example 2, except by using the element I-B also as a heat exchange element on the indoor side.

### Comparative Example 2.

A heat exchange ventilator was obtained similarly to Example 1, except by using the element I-A also as a heat exchange element on the indoor side.

### <Evaluation>

With respect to each of the heat exchange ventilators obtained according to Examples 1 to 3, Reference Examples 1 and 2, and Comparative Example 1 and 2, a total heat-exchange efficiency and an average pressure-loss increase-speed ratio were obtained. The average pressure-loss increase-speed ratio is a ratio where an average pressure-loss increase-speed in the heat exchange ventilator of Reference Example 2 is assumed at "1". An average pressure-loss increase-speed AR of each of the heat exchange ventilators was obtained by an expression AR=(PD₂-PD₁)/T, where each of the heat exchange ventilators was operated under the conditions that: the temperature of outdoor air was -10°C, the temperature of indoor air was 20°C, the humidity of outdoor air was 100% RH, and the humidity of indoor air was 50% RH; and a pressure loss PD₁ in the heat exchange element on the outdoor side at a start of the operation and a pressure loss PD₂ in the heat exchange element on the outdoor side at a time point after a certain time elapsed from the start of the operation were measured. Letter "T" in the expression denotes an elapse time from when the pressure loss PD₁ is measured until when the pressure loss PD₂ is measured.

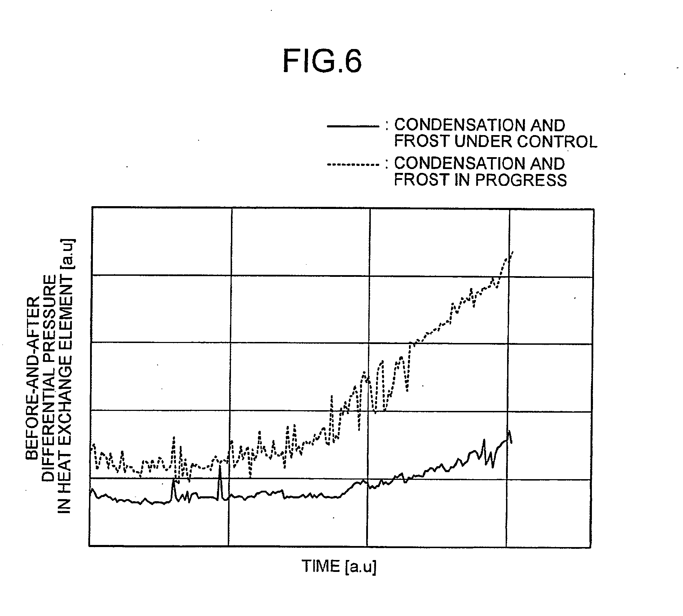

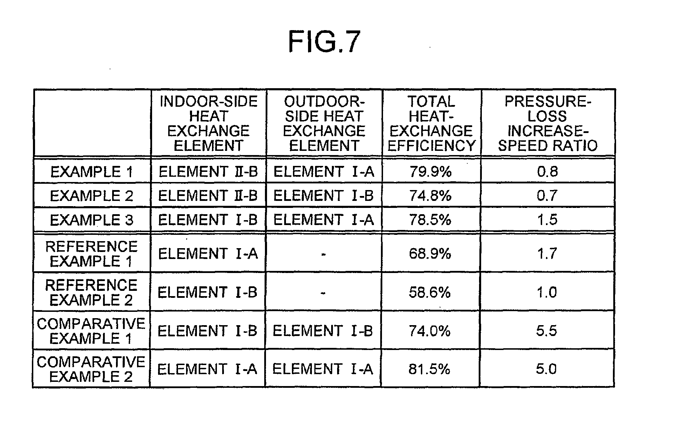

The larger the average pressure-loss increase-speed AR, the more condensation and frost in the heat exchange element are in progress. As a result, the air duct in the heat exchange element is closed early. On the contrary, the smaller the average pressure-loss increase-speed AR, the more condensation and frost in the heat exchange element are controlled. As a reference, an example of respective measurement results of variations with time in before-and-after differential pressure in a heat exchange element on which condensation and frost is controlled, and variations with time in before-and-after differential pressure in a heat exchange element on which condensation and frost is in progress, is shown in FIG. 6. Respective measurement results of a total heat exchange efficiency and an average pressure-loss increase-speed ratio obtained with respect to each of the heat exchange ventilators described above are shown in FIG. 7.

As is clear from FIG. 7, in the heat exchange ventilators according to Examples 1 to 3, although there are slight variations in data, the total heat-exchange efficiency is higher than those of respective heat exchange ventilators according to Reference Examples 1 and 2, and Comparative Examples 1 and 2, and the average pressure-loss increase-speed is controlled to equal to or lower than that of the heat exchange ventilator according to Reference Example 1.

### INDUSTRIAL APPLICABILITY

The heat exchange ventilators according to the present invention are preferable as a heat exchange ventilator for household use and a heat exchange ventilator for commercial use, and particularly suitable as a heat exchange ventilator to be used in a cold district.

## Claims

1. A heat exchange ventilator that includes a supply air duct that takes in outdoor air and blows it out indoors, an exhaust air duct that takes in indoor air and blows it out outdoors, and a plurality of heat exchange elements that exchanges heat between outdoor air flowing down through the supply air duct and indoor air flowing down through the exhaust air duct, the heat exchange elements being arranged in series from an outdoor side to an indoor side, wherein a sensible heat exchange efficiency of a heat exchange element arranged on a most outdoor side is higher than a sensible heat exchange efficiency of a heat exchange element arranged on an indoor side adjacent to the heat exchange element arranged on the most outdoor side.

2. A heat exchange ventilator that includes a supply air duct that takes in outdoor air and blows it out indoors, an exhaust air duct that takes in indoor air and blows it out outdoors, and a plurality of heat exchange elements that exchanges heat between outdoor air flowing down through the supply air duct and indoor air flowing down through the exhaust air duct, the heat exchange elements being arranged in series from an outdoor side to an indoor side, wherein a latent heat exchange efficiency of a heat exchange element arranged on a most outdoor side is lower than a latent heat exchange efficiency of a heat exchange element arranged on an indoor side adjacent to the heat exchange element arranged on the most outdoor side.

3. A heat exchange ventilator that includes a supply air duct that takes in outdoor air and blows it out indoors, an exhaust air duct that takes in indoor air and blows it out outdoors, and a plurality of heat exchange elements that exchanges heat between outdoor air flowing down through the supply air duct and indoor air flowing down through the exhaust air duct, the heat exchange elements being arranged in series from an outdoor side to an indoor side, wherein a sensible heat exchange efficiency of a heat exchange element arranged on a most outdoor side is higher than a sensible heat exchange efficiency of a heat exchange element arranged on an indoor side adjacent to the heat exchange element arranged on the most outdoor side, and a latent heat exchange efficiency of the heat exchange element arranged on the most outdoor side is lower than a latent heat exchange efficiency of the heat exchange element arranged on an indoor side adjacent to the heat exchange element arranged on the most outdoor side.
